(19)

**Europäisches Patentamt**
**European Patent Office**
**Office européen des brevets**

(11) **EP 4 321 952 A2**

(12) **EUROPEAN PATENT APPLICATION**

(43) Date of publication:
**14.02.2024 Bulletin 2024/07**

(21) Application number: **23190628.0**

(22) Date of filing: **09.08.2023**

(51) International Patent Classification (IPC):
**G05B 23/02** $^{(2006.01)}$ **B23K 9/095** $^{(2006.01)}$
**B23K 31/12** $^{(2006.01)}$

(52) Cooperative Patent Classification (CPC):
**G05B 23/024; B23K 9/0953; B23K 31/125**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.08.2022 IT 202200017061**

(71) Applicants:
• **Tiberina Solutions S.r.l.**
**06019 Umbertide (PG) (IT)**

• **SOL S.p.A.**
**20052 Monza (MB) (IT)**

(72) Inventors:
• **BUONOCORE, Adriano**
**06019 Umbertide (PG) (IT)**
• **RUTILI, Emanuele**
**06019 Umbertide (PG) (IT)**
• **FERRARIO, Davide**
**20052 Monza (MB) (IT)**

(74) Representative: **Ercolani, Simone Pietro**
**Marietti, Gislon e Trupiano S.r.l.**
**Via XX settembre, 80**
**06121 Perugia (PG) (IT)**

(54) **METHOD AND SYSTEM FOR MONITORING A WELDING PROCESS**

(57) Method of checking one or more welding portions (T1,T2,T3,...Tn) of a product (P) according to given design specifications, comprising the step a) of activating welding means (2), the step b) of performing the welding of said one or more welding portions (T1,T2,T3,... Tn) for said product (P), the step c) of acquiring, during said step b), a series of welding parameters (P1, P2, P3, P4, ...,Pn) for each portion of said one or more welding portions (T1,T2,T3,... Tn), and the step d) of examining said welding parameters acquired during said step c) or successive processing of said welding parameters acquired during said step c) for each welding portion of said one or more welding portions (T1,T2,T3,... Tn), wherein said step d) is carried out by using a neural network (N) which takes as input said parameters acquired (P1, P2, P3, P4,...,Pn) or said successive processing of said welding parameters acquired during said step c) for each welded portion of said one or more welding portions (T1,T2,T3,...Tn), and which returns as output, for each welded portion of said one or more welding portions (T1,T2,T3,... Tn), a value adapted to determine whether said welded portion of said plurality of welding portions is different from said determined design specifications for said welded portion.

**FIG.1**

EP 4 321 952 A2

**Description**

FIELD OF THE INVENTION

The present invention concerns a method of checking one or more welding portions of a product and respective checking system. In particular, such method is used in industrial processes in which the number of weldings to be performed on a single product is rather high. In particular, such method can be used to make cabins for operating machines such as, for example but without limitations, tractors. It should be noted that although product to be welded will henceforth mean, by way of example, the cabin of an operating machine, any product implemented through a single welding portion or a plurality of welding portions such as, for example, structural automotive components (such as suspension crosspieces, suspension arms, crash box crosspieces and dashboard crosspieces), machine components for the agricultural sector (such as cabin supports, tanks, fenders or front loaders), civil structural components and/or welded components for the railway sector, anyhow falls within the protection scope of the present invention.

KNOWN PRIOR ART

According to known art, the cabins of operating machines are implemented by a complex process of welding the various components. Such welding process, of the arc type, can also comprise up to more than one hundred and fifty portions to be welded per each individual product. The set of processes for welding the aforementioned portions to be welded is then followed by further processes adapted to determine the effectiveness of such weldings.
The checking of the weldings performed is an extremely important step of the cabin production process. In fact, the structural resistance of the cabin mainly depends on such weldings. The lack of effectiveness when carrying out even just a few welding portions of the more than one hundred and fifty ones to be performed can determine the breakage of the cabin in the event of an accident and thus risks for the driver or other workers.
To date, checks are performed on a random basis. In practice, for each productive cycle of several cabins, one is selected and some welding portions of the same, which portions are deemed particularly critical, are selected. Destructive tests are performed on such portions and, by way of example, various tests are performed in the specific case, among which macrographic tests to check the compliance of the welded joint to the product specifications; such analyses provide a considerable economic expenditure given the necessity to demolish an entire cabin.
In addition to requiring a considerable amount of time and the use of highly specialized personnel, it is clear that such activities do not anyhow solve the problem of ensuring the effectiveness of all welding portions performed on the cabin produced, nor ensure that all cabins of the same batch produced, and not analyzed, also comply with the design specifications.
Moreover, checks are also highly dependent on the skills and experience of the operator. Such indeterminacy in the results at the end of the welding processes, preferably of the arc type, and especially in case of in-line industrial products, is clearly a very serious problem and the subject of studies within the sector.
Document US2017/0032281, in the name of Illinois Tool Works Inc., is a welding production knowledge system used to process welding data collected from one of a plurality of welding systems. The welding production knowledge system comprises a communication interface coupled to a plurality of welding systems located in one or more physical positions. The communication interface can be configured to receive welding data associated with one weld from one of said plurality of welding systems. The welding production knowledge system can comprise an analytical computing platform operatively coupled to the communication interface and a welding data archive. The welding data archive uses a set of data comprising the welding process data related to said one or more physical positions and/or welding quality data related to said one or more physical positions. The analytical computing platform can use a machine learning algorithm of welding production knowledge to analyze welding data compared to welding data archive so as to identify a defect in said weld.
The system described in US2017/0032281 however uses sensors for acquiring welding parameters already present in the welding means. This considerably limits the possibility to use a checking system and respective method without there being any loss of information in the passage of data from the welding means to the checking system itself. Moreover, such document does not precisely define the parameters to be used as input from the neural network used. The use of all the parameters mentioned as input data for the neural network would make it impossible to use this technique for "real time" checks and the processing process would anyhow be rather complex and ineffective from an industrial point of view.
Document DE102010023663, in the name of DAIMELR, describes a checking device comprising a measuring unit which includes independent measuring modules for detecting electrical signals indicative of welding process and/or brazing process parameters. An assessment device assesses and classifies the process parameters and carries out corrective measures based on the comparison of the process parameters with a predefined range of tolerance.
Still, document FR3109325, in the name of AIR LIQUIDE, describes a method of determining the performance of a welding method performed on at least one metal part, in particular an electric arc welding or laser welding method, as well as a device adapted and intended to implement such method.

In the light of what has been stated, object of the present invention is to implement a method for checking one or more welding portions of a product according to given design specifications and which allows to quickly and safely ensure the reliability of such welded portions.

In particular, object of the present invention is to implement a method which allows to perform the checking of such welding portions of a product in a simple way and without requiring large investments.

Still, object of the present invention is to implement a method which allows to perform the appropriate checks without using excessive human resources or times.

Finally, object of the present invention is to also implement a checking system that is able to implement the method subject matter of the invention, thus overcoming the problems of known art.


SUMMARY OF THE INVENTION

These and other objects are achieved by means of a method of checking one or more welding portions of a product according to given design specifications, which comprises the step a) of activating welding means, preferably of the arc type, the step b) of performing the welding of said one or more welding portions for said product, the step c) of acquiring, during said step b), a series of welding parameters for each portion of said one or more welding portions, and the step d) of examining said welding parameters acquired during said step c) or successive processing of said welding parameters acquired during said step c) for each welding portion of said one or more welding portions, wherein said step d) is carried out by using a neural network which receives as input said parameters acquired or said successive processing of said welding parameters acquired during said step c) for each welded portion of said one or more welded portions, and which returns as output, for each welded portion of said one or more welding portions, a value adapted to determine whether said welded portion of said one or more welding portions is different from said determined design specifications for said welded portion. Such solution allows to achieve the objects suggested. In fact, at the end of the welding process performed on a product, it is always possible to determine if such welds were performed according to the design specifications without using particular tools and/or specialized personnel, thanks to the selection of given welding parameters developed for specific materials and operative methods and thanks to the use of the neural network. Moreover, compared to other calculation methods, the neural network allows to quickly carry out the processing required, thus providing output results shortly after the welding portions were completed.

In particular, said neural network is a neural network of the feed forward type. In practice, such type of neural network has the advantage of providing the desired output in a very short amount of time, i.e. the compliance or non-compliance of the welded joint (said welding portion) compared to said design specifications, thanks to the combinations generated within the aforesaid neural network, starting from a known sampling of said welding parameters.

Still, said neural network comprises a plurality of layers of which at least one first layer is for the input of said series of welding parameters for each welding portion of said one or more welding portions and a second output layer of the binary type which returns as output a value adapted to determine whether each welded portion is different from the design specifications for said welded portion.

In particular, said neural network has a binary output result, wherein the activation threshold for determining said output result is based on a sigmoid model.

According to a particular embodiment of the invention, said series of parameters comprises the intensity of the welding current, the electric arc voltage (or also electric voltage), the welding rod speed and the flow rate of the gas used by the welding machine during the welding of that specific portion of said one or more welding portions, also keeping the type of materials used and the position of said one or more welding portions into account.

It should be observed that welding current will mean the supply current of the welding machine which passes in the secondary circuit of the welding machine's inverter. Such secondary circuit of the inverter, galvanically insulated from the primary circuit - which instead draws current directly from the power distribution network -, is crossed by current with a decidedly higher intensity than that of the primary circuit and works on lower voltages, i.e. at 20-50Vdc, compared to those at which the primary circuit works, i.e. at 400Vac.

According to a particular aspect of the invention, said successive processing of said welding parameters acquired during said step c) comprise the step c1) of calculating the average value of the intensity value of the welding current, the average value of the electric arc voltage and the average value of the welding rod speed at any given time interval; said neural network thus takes as input said average value of the intensity value of the welding current, said average value of the electric arc voltage and said average value of the welding rod speed for each welded portion of said one or more welding portions. The neural network thus only works with the average amounts of such parameters obtained by dividing the sum of the values of the parameter acquired at given times during the step b) by the number of samplings performed during the time interval used to perform the welding process of that particular portion. This way, the neural network does not work in a time-varying way, i.e. instant by instant, on the ever-changing values of the parameters detected during the welding process of that particular portion, but only on the average value of the parameters detected during the welding process of each welding portion examined. This greatly simplifies the entire checking process. Advantageously, said step b), said step c) and said step f) occur in real time. In practice, at the end of the welding process performed on a given product, it is always possible to know whether or not it complies with the design specifications.

In practice, the examination of the welding portions can occur in real time without having to interrupt production or wait for the results of further specific analyses on the product. Such result would not be achievable with the classic product checking methods used up to today. In fact, by means of the checking method of know art, the product must always be subsequently subjected to non-destructive and destructive examinations which anyhow require time and qualified personnel. Moreover, the results achieved are not always easy to interpret, thus the technician who conducts such tests must be highly specialized and trained so as to avoid making mistakes when reading the results achieved. In any case, the use of the neural network allows to achieve the final results extremely quickly.

Still, the step e) of transmitting said series of welding parameters acquired by at least one first data processor to at least one second data processor connected remotely with respect to said first data processor is comprised between said step c) and said step d), wherein said neural network resides on said at least one second data processor.

Moreover, said transmission of said series of welding parameters from said at least one first processor to at least one second remote data processor occurs through an Internet protocol, wherein said at least one first processor is preferably arranged locally, preferably where said step a) occurs.

Theoretically, this allows to be able to exploit only one processor located in another site with respect to the production side to perform the calculations via the neural network and to then relay them back on site for the results of the check. This also allows to be able to exploit only one remote data processor for multiple production sites in which numerous welding processes occur contemporaneously on a same product with respect to which the same neural network can be used for the checking calculations. Since the second processor is the same for all processes, the times and amount of personnel assigned to perform the checking task in all the production sites of that given product are considerably reduced.

According to a particular embodiment, said method comprises the step h) of measuring the joint temperature at said one or more welding portions for each portion of said one or more welding portions during said step b). The temperature of each portion of said one or more welding portions can be relevant for understanding whether the weld was done properly and can become a further way of checking whether the welding is proceeding properly.

The temperature measured during said step h) is transferred to said second processor.

Moreover, said method comprises the further step j) of calculating during said step b) the amount of energy used to carry out the welding of the respective portion to be welded for each portion of said one or more welding portions, wherein said amount of energy is calculated by multiplying the intensity of current and the current voltage which are used by said by said welding means for the time needed to execute the welding of the respective portion to be welded.

In particular, such amount of energy is also known as "heat gain factor" of the welding. Such heat gain factor is calculated for each portion, by thus integrating the values of the current intensity and voltage measured over time, with the consequent creation of a value which can then successively be used to give greater consistency to the neural network used and an improved effectiveness of the same in accurately predicting defects.

The amount of energy is calculated during said step j) by said second processor.

Moreover, the method further also comprises the step f) of transmitting the data processed by the second data processor to said first data processor or to a third data processor between said step c) and said step d), so as to allow the operator to manage the welding process of the product.

Moreover, subsequent to said step d), said method comprises the step g) of reworking one or more portions of said one or more welding portions, if from the examination of said parameters acquired or of said successive processing of said welding parameters acquired during said step c), said one or more welding portions are assessed to be different from the design specifications for said one or more welding portions and/or if the temperature detected in said step h) falls outside a given range of predefined temperatures along at least one of said one or more welding portions and/or if the amount of energy calculated during said step j) falls outside of a given range of values of predefined amounts of energy along at least one of said one or more welding portions.

Thanks to such possibility, it is not necessary to stop the marketing of a plurality of products of a given batch but simply of the only product resulted to be defective.

Thus, in practice, thanks to the checking method used, it is possible to ensure a greater level of accuracy in predicting the effectiveness of a welding, thus increasing the level of quality of the welding operation.

Still, the step k) of coupling one or more sensors for measuring at least the intensity of the welding current, the electric arc voltage, the welding rod speed, the flow rate of the gas to said welding means and the step l) of adjusting the input signal to said one or more sensors by means of one or more inner filters, preferably of hardware and/or software type so as to make the acquisition of the signals independent regardless of the welding means used, are comprised before said step a).

Essentially, the method can be used on any type of welding means and works regardless of the welding means used, whether they are of electromechanical type or inverter type. In fact, unlike the method of known art, in which the welding parameters are detected directly by the welding means and thus require a double circuit to operate, i.e. the inner circuit of the welding means and the predictive outer circuit, the method subject matter of the present invention only operates with a single circuit, with huge reduction of possible mistakes which can arise whenever using two distinct circuits. Thus, this allows to use the method on all welding means and not only on specific welding means which provide output measures whose veracity cannot be checked.

Finally, said design specifications comprise value ranges deemed compliant as a result of tests, preferably but not exclusively, of the destructive or macrographic type, performed on one or more portions of said one or more welding portions.

The objects are also reached by means of a system of checking one or more welding portions of a product according to given design specifications, wherein said one or more welding portions are welded by means of welding means for welding a plurality of elements of said product along said one or more welding portions, said checking system comprising acquisition means for acquiring, for each welded portion, a series of welding parameters of said welding means and examination means for examining, for each welded portion of said one or more welding portions, said series of welding parameters acquired by said acquisition means, wherein said examination means provide for the use of a neural network which takes as input said acquired parameters for each welded portion of said one or more welding portions, and which returns as output, for each welded portion of said one or more welding portions, a value adapted to determine if said welded portion is different from said design specifications for said welded portion.

Moreover, said acquisition means comprise one or more sensors for measuring the intensity of the welding current, the electric arc voltage, the welding rod speed, the flow rate of the gas, said one or more sensors are functionally connected to said examination means and further being shaped for being coupled to said welding means, wherein said one or more sensors comprise one or more inner filters, preferably of the hardware and/or software type, for adjusting the input signal to said one or more sensors so as to make the acquisition of the signals independent regardless of the welding means used.

Thus, in practice, the system is provided with acquisition means, such as one or more sensors, which can be connected to any welding means, thus without using the sensors present in the most modern welding means, i.e. those of the inverter type. This provides the clear advantage of being able to use the checking system without being constrained to a particular welding machine. Such possibility is made possible thanks to the presence, downstream of the sensors, of hardware filters of the LC circuit and software type for example.

Still, said acquisition means further comprise one or more further sensors for measuring the temperature of said one or more welding portions.

Moreover, examination means comprise a calculation unit for calculating the amount of energy used to carry out the welding of the respective portion to be welded, wherein said amount of energy is calculated by multiplying the intensity of current and the current voltage which are used by the welding machine for the time needed to execute the welding of the respective portion to be welded.

Moreover, said examination means comprise at least one first data processor and at least one second data processor connected remotely with respect to said first data processor, said neural network and/or said calculation unit residing on said at least one second data processor and said at least one first data processor preferably being arranged locally with respect to where said welding means operate.

Moreover, said examination means further comprise a third data processor connected remotely to said second data processor, wherein said third data processor allows to control the welding process of said product. In particular, such third data processor comprises a tablet, or a smartphone or a laptop computer, through which the operator, once the welded welding portions have been checked, can decide to interrupt the production line or manage its speed, or manage any product or the entire batch that did not pass the check by proceeding to further checks.

Finally, communication means are comprised in the system, between said at least one first data processor preferably arranged locally, and/or said third data processor, and said at least one second remote data processor, wherein said communication means adopt an Internet protocol.

These and other aspects of the present invention will be made clearer by the following detailed description of a preferred embodiment provided herein only by way of nonlimiting example, with reference to the accompanying figures, wherein:

figure 1 is a schematic view of the system according to the invention;
figure 2 is a schematic view of a checking system according to a further embodiment of the invention;
figure 3 is a schematic view of the neural network model used.

DETAILED DESCRIPTION OF A PREFERRED EMBODIMENT OF THE PRESENT INVENTION

With particular reference to such figures, the system for checking a plurality of welds T1, T2, T3,.., Tn of a product, such as for example a cabin P for a driving machine such as a tractor, is denoted by 1.

In the embodiment example described hereunder, it should be specified that the number of welding portions is limited to three, i.e. T1, T2 and T3, however the number of welding portions to which a product P, such as a cabin, can be subjected can also be of a single portion or well over three portions, even more than one hundred and fifty portions T1,T2,T3,..,T150, without thereby departing from the protection scope of the present invention.

Moreover, although in the example depicted herein, product P means a cabin for an operating machine, any product implemented by a welding process, preferably of the arc type, would anyhow fall within the scope of protection of the present invention.

The system 1 for checking a plurality of welding portions T1,T2,T3 of the cabin P for an operating machine according to given design specifications can comprise welding means 2 for welding a plurality of elements Pa, Pb, Pc, Pd of the product P along the welding portions T1,T2 and T3. It should be observed that the welding means 2 comprise a plurality of welding machines 2a,2b,2c of the arc type arranged at portions to be welded T1, T2 and T3. Alternatively, the welding means 2 comprise only one welding machine of the arc type which is moved to reach the three portions to be welded Pa, Pb and Pc in sequence, without thereby departing from the protection scope of the present invention. In an alternative embodiment of the invention, said welding means 2 are not part of the checking system 1. In practice, the system 1 for checking one or more welding portions T1,T2,T3,..Tn of a product P according to given design specifications is adapted to operate on welding means 2. Thus, the welding portions T1,T2,T3 are welded by means of such welding means 2 adapted to weld a plurality of elements Pa,Pb,Pc,..Pn of the product P along such welding portions T1,T2,T3.

The system 1 comprises acquisition means 3 for acquiring, for each welded portion T1, T2 and T3, a series of welding parameters P1,P2,P3, P4, Pn of the welding means 2 and examination means 4 for examining, for each welded portion of the plurality of portions T1,T2,T3, the series of welding parameters acquired by the acquisition means 3. The acquisition means 3 can be electronic boards for detecting the welding parameters, i.e. boards which receive a plurality of variable voltage and/or current signals associated with the welding means 2.

In particular, the series of parameters P1, P2, P3, P4 comprises the intensity of the welding current for each welding machine 2a,2b,2c, the electric arc voltage, the welding rod speed and the flow rate of the gas used by the welding machine during the welding of that specific portion of the plurality of welding portions T1,T2 and T3.

The examination means 4 provide for the use of a neural network N which takes as input the aforementioned acquired parameters P1, P2, P3, P4 for each welded portion of the plurality of welded portions T1, T2, T3, and which returns as output, for each welded portion of the plurality of welded portions T1,T2,T3, a value adapted to determine if such welded portion T1 (or T2 or T3) is different from the design specifications for that welded portion.

According to the embodiment described herein, the acquisition means 3 comprise, for each welding portion T1, T2, T3, sensors for measuring the intensity of the welding current P1, the electric arc voltage P2, the welding rod speed P3 and the flow rate P4 of the gas. Such sensors are functionally connected to the examination means 4 and are further shaped for being coupled to the welding means 2, in the event such welding means 2 are separate from the system 1. In particular, such sensors comprise inner filters, such as for example LC circuits and software, for adapting the input signal to said sensors so as to make the acquisition of the signals independent regardless of the welding means 2 used.

Moreover, the acquisition means 3 further comprise further sensors for measuring the joint temperature of the welding portions T1,T2,T3. Such further sensors are not shown in the accompanying figures.

Still, the examination means 4 comprise a calculation unit 70 for calculating the amount of energy P6 used to carry out the welding of the respective portion to be welded T1,T2 or T3. The amount of energy is calculated by multiplying the intensity of current P1, the average value of the same Pm1 and the current voltage P2, or the average value of the same Pm2, which are used by the welding machine for the time needed to execute the welding of the respective portion to be welded T1,T2 or T3.

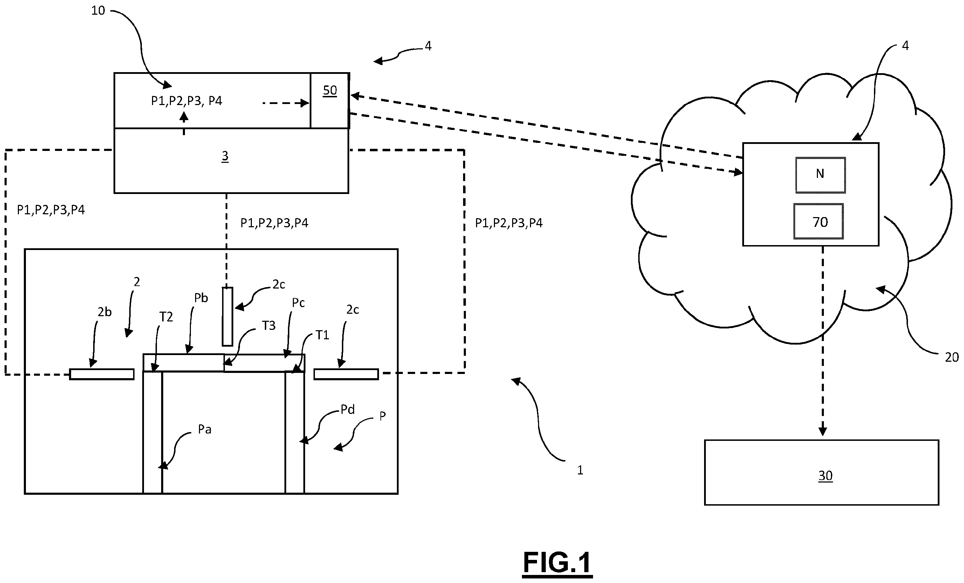

Moreover, always with reference to figure 1, the examination means 4 comprise a first data processor 10 and a second data processor 20 connected remotely with respect to the first data processor 10. In particular, the neural network N resides on the second data processor 20 and the first data processor 10 is preferably arranged locally with respect to where the welding means 2 operate. Moreover, also the calculation unit 70 for calculating the amount of energy resides on the second data processor 20.

According to the embodiment described herein, communication means 50 between the first local data processor 10 and the second remote data processor 20 are also comprised in the system 1. The communication means 50 adopt an Internet protocol for exchanging information.

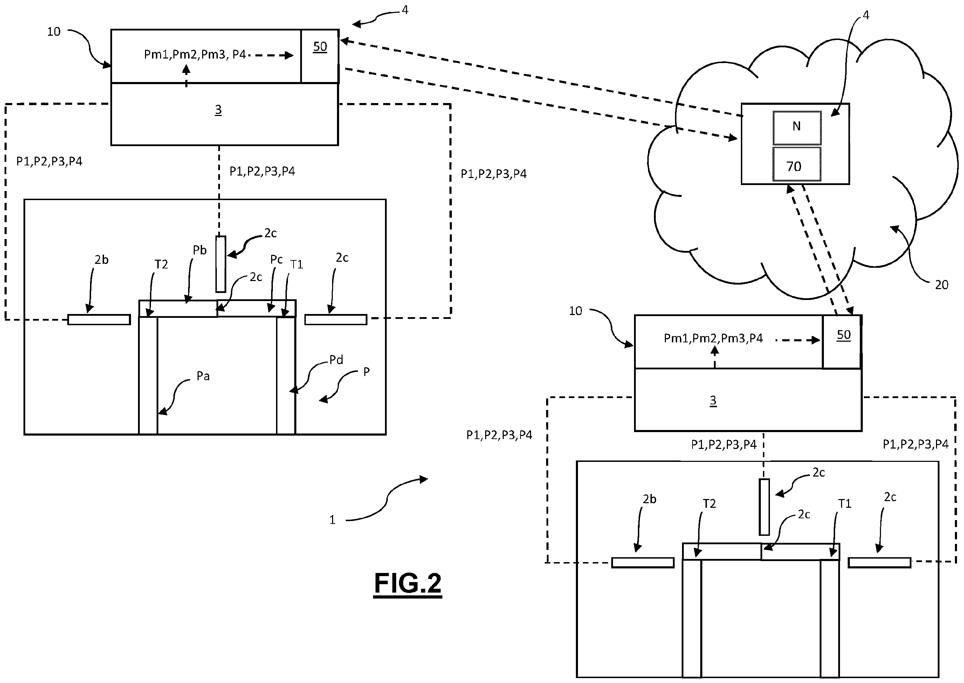

In practice, while the first data processor 10 receives the data acquired by the acquisition means 3, the second data processor 20 examines the data received from the first processor 10. Once such data has been processed by the neural network N, the results are then transmitted to the first data processor 10 (see figure 2) or to a third data processor 30 (see figure 1) available locally for the operator, who makes any decisions based on such results. The third data processor 30 comprises a tablet with which the operator can check the compliance or non-compliance of the welding portion just welded. The third data processor 30 can also be a smartphone or any laptop computer easily transportable by the operator.

The second data processor 20 can theoretically be used by several first processors 10 receiving input parameters of the welding machine from the respective acquisition means 3 for each welded portion T1,T2 and T3 (see figure 2). This way, the welding activities of identical products carried out in different production sites could be analyzed by only one processor 20. This considerably simplifies such productive processes and the results achieved are especially extremely reliable and quick, without requiring specialized personnel or extensive destructive tests done on samples only. All the products P made are in fact subjected to such check. In the embodiment shown in figure 2, it is possible to also provide for the presence of a plurality of third data processors 30 in a number equal to the number of the different production sites from which the welding parameters used for the check with the neural network N come.

In the alternative embodiment of the invention shown in figure 2, the examination means 4 examine successive processing of the welding parameters P1, P2, P3 and P4 acquired by the acquisition means 3 for each welded portion of said plurality of portions T1, T2, T3. Thus, alternatively to the previous embodiment, the welding parameters acquired are not directly examined but rather a successive processing of the acquired welding parameters.

According to such particular embodiment, the successive processing of said welding parameters acquired is achieved in the first processor 10, in which the average value of the intensity of the welding current Pm 1 measured during the welding of a specific portion T1 (or T2 or T3), the average value of the electric arc voltage Pm2 and the average value of the welding rod speed Pm3 are calculated. Thus, in this case, the neural network N takes as input the average value of the value of intensity of the welding current Pm1, the average value of the electric arc voltage Pm2 and the average value of the welding rod speed Pm3 for each welded portion of said plurality of welded portions T1,T2 and T3 and at any given time interval. The value of the flow rate P4 of gas is always kept constant during the welding of a single portion (also in the event of leakages) and does not thus require any successive processing.

According to the embodiment described herein, it should be observed that, in order to achieve a sufficient amount of data essential for the purpose of monitoring and predicting performed by the neural network, a continuous and defined sampling of the welding process is necessary preferably within a range of between 5 and 200 milliseconds, and even more preferably every 100 milliseconds, so as to limit the amount of data collected without affecting its representativeness for the desired purposes of the welding quality control. By virtue of the amount of data to be handled, the identification of identifying values for an underlying series of data, such as the average value, is also essential for the proper performance of the predictive activity algorithm achieved with the neural network. The average value of Pm1, Pm2 and Pm3 is the arithmetic mean of a range preferably between 2 and 20 contiguous values and more preferably between 10 contiguous values (thus, essentially, the average of the values over about each second of welding), so as to send an adequate number of values to the neural network to allow it to adequately operate by limiting processing time.

The checking system, with reference to the system 1 described above, is specified hereunder.

Such method of checking a plurality of welding portions T1,T2,T3 of a product P such as, precisely, a cabin for an operating machine, according to given design specifications comprises the step a) of activating the welding means 2 (2a, 2b and 2c), the step b) of performing the welding of the plurality of welding portions T1,T2,T3 for the product P, the step c) of acquiring, during the step b), a series of welding parameters P1, P2, P3, P4 for each portion of the plurality of welding portions T1,T2,T3, and the step d) of examining the welding parameters P1,P2,P3 and P4 acquired during the step c) for each welded portion of the plurality of portions T1,T2, and T3.

Advantageously, the step d) is implemented through the use of a neural network N which takes as input the aforementioned acquired parameters P1, P2, P3, P4 for each welded portion of the plurality of welding portions T1,T2 and T3, and which returns as output, always for each welded portion of the plurality of welded portions T1,T2,T3, a value adapted to determine if the welded portion T1,T2 or T3 is different from the design specifications for that welded portion.

In particular, the neural network N used is of the feed forward type.

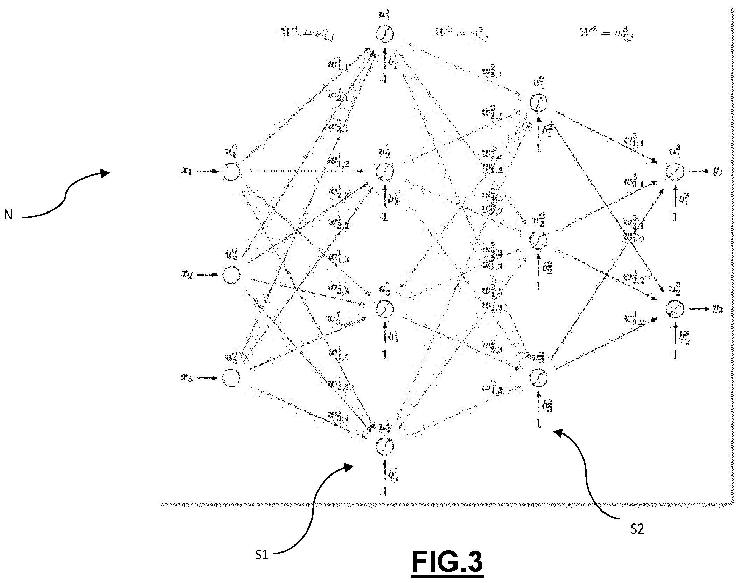

As shown in figure 3, the neural network N comprises a plurality of layers of which at least one first layer S1 for the input of the series of welding parameters P1,P2,P3 for each welding portion T1,T2,T3 of the plurality of welding portions and a second output layer S2 of the binary type which returns as output a value adapted to determine whether the welded portion T1,T2 or T3 is different from the design specifications for said welded portion T1, T2 or T3.

Moreover, the neural network N has a binary output result, wherein the activation threshold for determining the output result is based on a sigmoid model.

In particular, a *feedforward* neural network consists of a given number of layers, each formed by a given number of neurons. Each layer receives signals from the previous one, processes them and passes the result to the successive layer.

The intermediate layers all have the same structural characteristics, whereas the first and the last one are particular. The first *layer* receives signals from the outside and simply passes them to the successive layer and thus to the network; the last layer receives the signals weighed according to the connection values, from the previous layer, sums them and passes the result to the outside. In other words, the last layer activation function is simply the identity.

This allows to the output to be any real number (and not just a value comprised in [0,1]), as it should be if planning to use the network for approximating functions to real values. Essentially, a neuron in the i-th layer will receive inputs that can be denoted by:

$$u^i = (u_1^i, u_2^i, ..., u_{m_i}^i)$$

from the previous (i - 1)-th layer and will output a signal:

$$u^{i+1} = (u_1^{i+1}, u_2^{i+1}, ..., u_{m_{i+1}}^{i+1})$$

achieved by the following formula:

$$\eta^{i+1} = u^i W^i + b^i \left( cioè \; \eta_k^{i+1} = \sum_{j=1}^{m_i} u_j^i w_{j,k}^i + b_k^i \right),$$

$$u^{i+1} = s(\eta^{i+1})$$

wherein:

$W^i = (W_{j,k}^i)$ is the matrix of weights on the connections;
$b^i = (b_{j,k}^i)$ is the vector of coefficients to be assigned to the constant input, equal to 1 (*bias*);
$u^i$ = is the vector defining the behavior of the network in its different layers.

The contribution of the *bias,* can be assimilated to that of the other inputs. The vector of coefficients can be taken into account by simply adding a row to the matrix $W^i$:

$$\overline{W}^i = \begin{pmatrix} W^i \\ b^i \end{pmatrix}.$$

For consistency of notations, the vector defining the behavior of the network in the various layers must also be extended so as to also comprise the contribution of the *bias:*

$$\overline{u}^i = (u_1^i, u_2^i, ..., u_{m_i}^i, 1) = (u^i, 1).$$

Summarizing: a neural network consisting of n layers, each of which consists of $m_i$ neurons, will be characterized by n-1 matrices $W^i$ of dimension $m_{i-1} \times m_i$ (for i=1, ..., n) and by n-1 row vectors b' of dimension $m_i$. We can thus build the $(m_{i-1}+1 \times m_i)$-matrices $\overline{W}^i$ and the dimensional vectors $m_i+1$ $\overline{u}^i$ mentioned above so that, given an input signal:

$$u^0 = (u_1^0, u_2^0, ..., u_{m_0}^0)$$

we can calculate:

$$\eta^i = \bar{u}^{i-1}\, \overline{W}^i, \qquad u^i = s(\eta^i), \qquad i = 0, \ldots, n-1$$

and:

$$\eta^n = \bar{u}^{n-1}\, \overline{W}^n, \qquad u^n = \eta^n.$$

It is clear that a function of as many real variables as the number of neurons of the *input* layer was thus defined, with values in a Euclidean space of dimension equal to the number of neurons present in the *output* layer. As already observed, such function depends on a great number of parameters and this makes it extremely versatile in modeling a wide variety of behaviors.

Such explanation is however known to the technician of the sector and it is thus unnecessary to go further in depth on the matter herein.

In particular, the series of parameters P1, P2, P3 P4 comprise the intensity of the welding current (or of the welding machines 2a,2b,3c), the electric arc voltage, the welding rod speed and the flow rate of the gas used by the welding machine during the welding of that specific portion of the plurality of welding portions T1,T2 and T3.

According to a particular embodiment, the successive processing of said welding parameters acquired during said step c) are examined during the step d) for each welded portion of said plurality of portions T1,T2,T3. Alternatively to the previous embodiment, the welding parameters acquired are thus not directly examined but rather a successive processing of the latter acquired over time, in particular during the welding of each portion T1,T2 or T3.

Thus, in this case, the step d), which is implemented through the use of a neural network N, takes as input the successive processing of the welding parameters acquired during the step c) for each welded portion T1,T2,T3.

According to a particular aspect of this embodiment, the successive parameters of said welding parameters acquired during the step c) comprise the step c1) of calculating the average value of the value of intensity of the welding current Pm1, the average value of the electric arc voltage Pm2 and the average value of the welding rod speed Pm3 for each portion T1,T2 and T3 and at any given time interval. Thus, as mentioned above, the neural network N takes as input the average value of the intensity of the welding current Pm1, the average value of the electric arc voltage Pm2 and the average value of the welding rod speed Pm3 for each welded portion of said plurality of welding portions T1,T2,T3. The value of the flow rate P4 of gas is always kept constant (also in the event of leakages) and does not thus require any successive processing, nor is it sampled during the welding of a specific portion.

Always according to the method, the step b), the step c) and the step d) occur in real time. Thus, in practice, it is possible to receive the results of the welding check on each portion T1,T2 and T3 as soon as it was performed. The method is thus quick and does not require the use of further operators or specialized personnel in order to be performed.

Still, the step e) of transmitting the series of welding parameters P1, P2, P3, P4 or the processing of such series of welding parameters, i.e. Pm1, Pm2, Pm3, P4, acquired from at least one first data processor 10 to a second data processor 20 connected remotely with respect to the first data processor 10, is comprised between the step c) and the step d). Such neural network N advantageously resides on the second data processor 20.

In the event of several products to be welded in distinct geographic locations, for example when producing the same product P in two plants located in different geographic areas (see figure 2), a respective first processor 10 will thus be present in the area where the welding process occurs, for example. As shown in figure 2, each first processor 10 can access a second processor 20 on which the neural network N is installed for the local checking of the welding process of the product P being produced. The result achieved for both the products P subjected to a welding process can arrive a few minutes after the product has been made, with enormous advantages on all the successive welding checking process, considering the checking methods of known art. Thus, such process ensures safer and more reliable results since it is based on objectively acquired parameters and examination of a neural network N trained with data which has proven to be correct over time for the assessment of a weld according to production specifications.

Still, the transmission of the series of welding parameters P1, P2, P3, P4 (or of the average values of the welding parameters Pm1, Pm2, Pm3, P4) from the first processor 10, or from two first processors 10 in case of the embodiment of figure 2, to a second remote data processor 20 occurs through an Internet protocol. Preferably, the first processor 10 is arranged locally at where the step a) occurs.

In a further embodiment, the method further comprises the step f) of transmitting the data processed by the second data processor 20 to the first data processor 10 or to a third processor 30, to allow the operator to control the welding process of the product. In particular, such third data processor 30 comprises a tablet, or a smartphone or a laptop computer, through which the operator, once the welded welding portions have been checked, can manage the welding process of the product, i.e. can decide to interrupt the production line or manage its speed, or manage any product or the entire batch that did not pass the check by proceeding to further checks.

Moreover, the method comprises the step h) of measuring the joint temperature P5 at the welding portion T1,T2,T3 for each welding portion T1,T2,T3 during the step b) . Moreover, the method comprises the further step j) of calculating during the step b) the amount of energy P6 used to carry out the welding of the respective portion to be welded, for each welding portion T1,T2,T3. Such amount of energy P6 is calculated by multiplying the intensity of the current P1, or the average value of the same Pm1, and the current voltage P2, or the average value of the same Pm2, which are used by the welding means 2 for the time needed to execute the welding of the respective portion to be welded T1,T2,T3.

Still, subsequent to the step d), the method comprises the step g) of reworking one or more portions T1,T2 of the plurality of welding portions T1,T2,T3 if, from the examination of the parameters acquired P1, P2, P3, P4 or of the average values Pm1,Pm2 and Pm3, P4, such welding portions T1, T2 are assessed to be different from the design specifications for such welding portions T1,T2.

Whenever the method further comprises the steps h) and j), the step g) is also performed whenever the temperature P5 detected during the step h) falls outside a given range of predefined temperatures along at least one of the welding portions T1,T2, T3 and/or whenever the amount of energy P6 calculated during the step j) falls outside a given range of predefined values of amounts of energy along at least one of the welding portions T1,T2,T3.

In this case, since the process allows almost in real time to identify the product that does not comply with the design specifications and even the non-compliant welding portion, it allows to avoid having to recall, as currently occurs, an entire production batch for checking the compliance of all products made in that batch.

Thus, the use of cross-checks achieved during the steps h) and j) ensures the effectiveness and continuous improvement of the neural network N used and thus an improved quality control of the welded pieces. In fact, the check performed thanks to the neural network N is also accompanied by the check achieved by means of the joint temperature and amount of energy used for welding a given portion.

Moreover, the step k) of coupling the sensors for measuring the intensity of the welding current P1, the electric arc voltage P2, the welding rod speed P3 and the flow rate P4 of the gas to said welding means 2 and the step l) of adjusting the input signal to the sensors by means of one or more inner filters, preferably of hardware and/or software type, so as to make the acquisition of the signals independent regardless of the welding means 2 used, are comprised before said step a).

Such step allows to use the method on different welding means 2 without having to use the inner sensors present on the welding means themselves. Such inner sensors, although useful for measuring the preselected values as inputs to the neural network N, are part of a first inner circuit of the welding means, thus the data that reaches the neural network may not be perfectly correct since there is - as always occurs in these cases - a loss of information due to the transfer of such data from a first circuit to a second circuit. The use of ad hoc sensors, that can even adapt to the different types of welding means used, allows to make the system 1, and thus the method described above, independent of the welding means themselves.

Moreover, the method comprises the step m) of bringing a further respective sensor closer to each portion to be welded T1,T2,T3, for measuring the joint temperature P5.

Finally, the design specifications comprise value ranges deemed compliant as a result of tests, preferably of the destructive or macrographic type, performed on one or more portions of said plurality of welding portions. Such design values preferably refer to the welding depth for each welding portion T1,T2 or T3.

**Claims**

1. Method of checking one or more welding portions (T1,T2,T3,...Tn) of a product (P) according to given design specifications, comprising the step a) of activating welding means (2), the step b) of performing the welding of said one or more welding portions (T1,T2,T3,... Tn) for said product (P), the step c) of acquiring, during said step b), a series of welding parameters (P1, P2, P3, P4,...,Pn) for each portion of said one or more welding portions (T1,T2,T3,... Tn), and the step d) of examining said welding parameters acquired during said step c) or successive processing of said welding parameters acquired during said step c) for each welding portion of said one or more welding portions (T1,T2,T3,... Tn), wherein said step d) is carried out by using a neural network (N) which takes as input said parameters acquired (P1, P2, P3, P4,...,Pn) or said successive processing of said welding parameters acquired during said step c) for each welded portion of said one or more welding portions (T1,T2,T3,...Tn), and which returns as output, for each welded portion of said one or more welding portions (T1,T2,T3,... Tn), a value adapted to determine whether said welded portion of said plurality of welding portions is different from said determined design specifications for said welded portion.

2. Method according to claim 1, wherein said neural network (N) is a neural network of the feed forward type and wherein said neural network comprises a plurality of layers of which at least one first layer is for the input of said series of welding parameters for each welding portion of said one or more welding portions and a second output layer of the binary type which returns as output a value adapted to determine whether said welded portion is different from the design specifications for said welded portion and wherein said neural network has a binary output result, wherein the activation threshold for determining said output result is based on a sigmoid model.

3. Method according to one or more of claims 1 to 2, wherein said series of parameters (P1, P2, P3, P4) comprises the intensity of the welding current (P1), the electric arc voltage (P2), the welding rod speed (P3) and the flow rate (P4) of the gas used by the welding machine during the welding of that specific portion of said plurality of welding portions.

4. Method according to claim 3, wherein said successive processing of said welding parameters acquired during said step c) comprise the step c1) of calculating the average value of the intensity of the welding current (P1m), the average value of the electric arc voltage (P2m) and the average value of the welding rod speed (P3m) at any given time interval, said neural network (N) taking as input said average value of the intensity value of the welding current (P1m), said average value of the electric arc voltage (P2m) and said average value of the welding rod speed (P3m) for each welded portion of said one or more welding portions (T1,T2,T3,...Tn).

5. Method according to one or more of claims 1 to 4, wherein said step b) said step c) and said step d) occur in real time.

6. Method according to one or more of claims 1 to 5, wherein, the step e) of transmitting said series of welding parameters (P1, P2, P3, P4,...,Pn) acquired by at least one first data processor (10) to at least one second data processor (20) connected remotely with respect to said first data processor (10) is comprised between said step c) and said step d), said neural network (N) residing on said at least one second data processor (20) and, preferably, the step f) of transmitting the data processed by said second data processor to said first data processor (10) and/or to a third data processor (30) to allow the operator to manage the welding process of said product, preferably said transmission of said series of welding parameters (P1, P2, P3, P4,..,Pn) from said at least one first processor (10) to at least one second remote data processor (20) occurs through an Internet protocol, even more preferably said at least one first processor (10) being arranged locally at said step a).

7. Method according to one or more of claims 1 to 6, wherein said method comprises the step h) of measuring the joint temperature (P5) at said one or more welding portions for each portion of said one or more welding portions (T1,T2,T3,..Tn) during said step b).

8. Method according to one or more of claims 1 to 7, wherein said method further comprises the step j) of calculating during said step b) the amount of energy (P6) used to carry out the welding of the respective portion to be welded, for each portion of said one or more welding portions (T1,T2,T3,..Tn), said amount of energy being calculated by multiplying the intensity of current, or the average value of the intensity of current, and the current voltage, or the average value of the current voltage which are used by said welding means (2) for the time needed to execute the welding of the respective portion to be welded.

9. Method according to one or more of claims 1 to 8, wherein, subsequent to said step d), said method comprises the step g) of reworking one or more portions (T1,T2) of said one or more welding portions (T1, T2, T3,... ,Tn) if said one or more welding portions (T1,T2) from the examination of said acquired parameters (P1, P2, P3, P4,...,Pn) or of said successive processing of said welding parameters acquired during said step c) are assessed to be different from the design specifications for said one or more welding portions and/or if the temperature (P5) detected in said step h) falls outside a given range of predefined temperatures along at least one of said one or more welding portions and/or if the amount of energy (P6) calculated during said step j) falls outside of a given range of predefined values of amounts of energy along at least one of said one or more welding portions.

10. Method according to one or more of claims 5 to 9, wherein the step k) of coupling one or more sensors for measuring at least the intensity of the welding current (P1), the electric arc voltage (P2), the welding rod speed (P3), the flow rate (P4) of the gas to said welding means (2) and the step l) of adjusting the input signal to said one or more sensors by means of one or more inner filters, preferably of the hardware and/or software type so as to make the acquisition of the signals independent regardless of the welding means (2) used, are comprised before said step a).

11. System (1) of checking one or more welding portions (T1, T2, T3, T4,...,Tn) of a product (P) according to given design specifications, wherein said one or more welding portions are welded by means of welding means (2) for welding a plurality of elements (Pa,Pb,Pc,...,Pn) of said product (P) along said one or more welding portions (T1,T2,T3,...Tn), said checking system comprising acquisition means (3) for acquiring, for each welded portion, a series of welding parameters (P1, P2, P3, P4,...,Pn) of said welding means (2) and examination means (4) for examining, for each welded portion of said one or more welding portions (T1,T2,T3,...Tn), said series of welding parameters acquired by said acquisition means (3), wherein said examination means (4) provide for the use of a neural network (N) which takes as input said acquired parameters (P1, P2, P4,..,Pn) for each welded portion of said one or more welding portions (T1,T2,T3,... Tn), and which returns as output, for each welded portion of said one or more welding portions (T1, T2, T3,... Tn), a value adapted to determine if said welded portion is different from said design specifications for said welded portion.

12. System according to claim 11, wherein said acquisition means (3) comprise one or more sensors for measuring the intensity of the welding current (P1), the electric arc voltage (P2), the welding rod speed (P3), the flow rate (P4) of the gas, said one or more sensors being functionally connected to said examination means (4) and further being shaped for being coupled to said welding means (2), said one or more sensors comprising one or more inner filters, preferably of the hardware and/or software type, for adjusting the input signal to said one or more sensors so as to make the acquisition of the signals independent regardless of the welding means (2) used.

13. System according to claim 12, wherein said acquisition means (3) further comprise one or more further sensors for measuring the joint temperature of said one or more welding portions (T1,T2,T3,.. Tn).

14. System according to one or more of claims 11 to 13, wherein said examination means (4) comprise a calculation unit for calculating the amount of energy (P6) used to carry out the welding of the respective portion to be welded, said amount of energy being calculated by multiplying the intensity of current, or the average value of the intensity of current, and the current voltage, or the average value of the current voltage which are used by the welding machine for the time needed to execute the welding of the respective portion to be welded.

15. System according to one or more of claims 11 to 14, wherein said examination means (4) comprise at least one first data processor (10) and at least one second data processor (20) connected remotely with respect to said first data processor (10), said neural network (N) and/or said calculation unit residing on said at least one second data processor (20) and said at least one first data processor (10) preferably being arranged locally with respect to where said welding means (2) operate.

FIG.1

**FIG.2**

**FIG.3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170032281 A
- DE 102010023663

- FR 3109325